# EUROPÄISCHE PATENTANMELDUNG

(11) **EP 1 110 703 A2**
(43) Veröffentlichungstag der Anmeldung: **27.06.2001**
(21) Anmeldenummer: 00710046.4
(22) Anmeldetag: 23.12.2000
(51) Int. Cl.: B29C 65/20, B29C 65/78, B25J 9/00

(54) **Vorrichtung und Verfahren zum Heizelementschweissen**

(30) Priorität: 24.12.1999 DE 19962974
(71) Anmelder: BIELOMATIK LEUZE GmbH + Co., D-72639 Neuffen (DE)
(72) Erfinder: Natrop, Joachim, 72581 Dettingen / Erms (DE); Mönch, Dietmar, 72664 Kohlberg (DE)
(74) Vertreter: Patentanwälte Ruff, Beier und Partner

(57) **Zusammenfassung**

Die Erfindung betrifft eine Vorrichtung und ein Verfahren zum Heizelementschweißen.

Aufgabe der Erfindung ist es, eine Vorrichtung und ein Verfahren zum Heizelementschweißen zu entwickeln, das in der Lage ist, an unterschiedlichen Stellen (13) eines Grundkörpers (11) Anbauteile (12) durch Heizelementschweißen (21,22) anzubringen.

Eine erfindungsgemäße Vorrichtung zum Heizelementschweißen (21,22) weist einen Schweißkopf (20) auf, der an einem Zustellantrieb zum Verfahren des Schweißkopfes (20) befestigt ist. Erfindungsgemäß ist der Zustellantrieb ein Industrieroboter (15). Dabei erfolgt die Positionierung des Schweißkopfes (20) durch den Industrieroboter (15) bis hin in eine definierte Umschaltlage bzgl. der Schweißstelle (13) am Grundkörper (11) koordinatengesteuert und vom Umschaltpunkt bis zur Schweißstelle kraftgesteuert.

## Beschreibung

Die Erfindung betrifft eine Vorrichtung und ein Verfahren zum Heizelementschweißen.

Das Heizelementschweißen wird vielfach dazu genutzt, um Anschweißteile an einem Grundkörper zu befestigen. Insbesondere finden Heizelementschweißverfahren dann Anwendung, wenn Grundkörper und Anschweißteil aus thermoplastischen Kunststoffen bestehen. Ein Anwendungsfeld für derartiges Heizelementschweißen ist insbesondere gegeben, wenn Anschweißteile an einem Blaskörper als Grundkörper angeschweißt werden. Derartige Blaskörper sind beispielsweise Kraftstofftanks von Kraftfahrzeugen. An diesen werden eine Vielzahl von Anschweißteilen, beispielsweise Tankeinfüllrohre, Anschlußleitungen und Ähnliches durch Heizelementschweißen befestigt.

Hierzu werden üblicherweise Schweißmaschinen verwendet, die einen kraftgesteuerten Zustellantrieb aufweisen und die in der Lage sind, einen Schweißkopf mit einem Greifer für das Anschweißteil einerseits zur Übergabestelle für das Anschweißteil und andererseits an eine festgelegte Schweißstelle zu verfahren. Dabei muß für jedes Anschweißteil ein gesonderter Zusteller vorhanden sein, der lediglich in der Lage ist, ein Anschweißteil an einer vorbestimmten Stelle anzuschweißen. Um einen sicheren und fluiddichten Anschweißvorgang zu erreichen, muß das Heizelementschweißen kraftgesteuert bzgl. der Anlagekraft sowohl von Heizspiegel als auch Anschweißteil an der Anschweißstelle erfolgen.

Aufgabe der Erfindung ist es, eine Vorrichtung und ein Verfahren zum Heizelementschweißen zu entwickeln, das in der Lage ist, an unterschiedlichen Stellen eines Grundkörpers Anbauteile durch Heizelementschweißen anzubringen.

Diese Aufgabe wird durch eine erfindungsgemäße Vorrichtung bzw. das erfindungsgemäße Verfahren gemäß den unabhängigen Patentansprüchen 1 und 7 gelöst.

Eine erfindungsgemäße Vorrichtung zum Heizelementschweißen weist einen Schweißkopf auf, der an einem Zustellantrieb zum Verfahren des Schweißkopfes befestigt ist. Erfindungsgemäß ist der Zustellantrieb ein Industrieroboter. Dabei erfolgt die Positionierung des Schweißkopfes durch den Industrieroboter bis hin in eine definierte Umschaltlage bzgl. der Schweißstelle am Grundkörper koordinatengesteuert und vom Umschaltpunkt bis zur Schweißstelle kraftgesteuert.

Eine derartig ausgestaltete Vorrichtung zum Heizelementschweißen hat den Vorteil, daß sie durch den Industrieroboter in dessen Bewegungsbereich nahezu beliebige Ausrichtungen zwischen Grundkörper und Anschweißteil ermöglicht. Somit ist es auch möglich, den Schweißkopf an verschiedene Stellen bzgl. dem Grundkörper zu verfahren. Mit einem einzigen Greifer an einem einzigen Schweißkopf können daher viele gleiche Anschweißteile an einem einzigen Grundkörper befestigt werden. Auch eine leichte Umrüstung auf unterschiedliche Grundkörper ist möglich, da hierzu nur jeweils andere Koordinatenwerte für die Umschaltstelle und für die Zustellrichtung des Schweißkopfes von der Umschaltstelle zur Schweißstelle vorgegeben werden müssen.

Vorzugsweise handelt es sich bei dem Industrieroboter um einen 6-Achsen-Industrieroboter. Derartige Industrieroboter weisen die größte Bewegungsfreiheit für den an ihnen befestigten Endeffektor, hier den Schweißkopf, auf.

Gemäß bevorzugter Ausgestaltung der Erfindung ist ein Kraftsensor zur Erfassung der Kräfte in allen Richtungen zwischen Roboterarm und Schweißkopf angeordnet.

Gemäß weiterer bevorzugter Ausgestaltung der Erfindung ist der Schweißkopf selbsttätig an dem Roboterarm ankuppelbar. Dies ermöglicht es, mit einem einzelnen Industrieroboter automatisch und selbsttätig den Schweißkopf zu wechseln und somit einen einzigen Grundkörper mit unterschiedlichen Anschweißteilen zu versehen, die nicht notwendigerweise mit demselben Greifer und denselben Heizspiegeln für Grundkörper und Anschweißteil anschweißbar sein müssen. Neben einem Wechsler für den gesamten Schweißkopf ist es auch noch möglich, einen Wechsler für den Greifer des Anschweißteiles vorzusehen. Dies ist dann vorteilhaft, wenn die Anschweißteile zwar derart ähnliche Schweißstellen aufweisen, daß eine Erwärmung sowohl von Schweißstelle als auch Anschweißteil über gleiche Schweißspiegel möglich ist, die Form des Anschweißteiles es jedoch erfordert, unterschiedliche Greifer für die Anschweißteile zu verwenden. Durch diese Ausgestaltung ist es möglich, einen einzigen Grundkörper mit allen Anschweißteilen, die an ihm anzubringen sind, zu bestücken. Aufgrund der geringen Umrüstzeiten ist eine sehr flexible Anpassung an die Grundkörper möglich. Durch die recht freie Bestimmung der Lage der Schweißstellen ist es auch möglich, Grundkörper unterschiedlichster Form mit der gleichen Vorrichtung mit ihren Anschweißteilen zu bestücken. Somit wird es möglich, mit geringen Rüstzeiten und Rüstkosten auch kleine Serien auf ein und derselben Schweißvorrichtung zum Heizelementschweißen zu bestücken.

Gemäß weiter bevorzugter Ausgestaltung der Erfindung wird für die Kraftsteuerung als Bezugsgröße für die Regelung die Differenz zwischen der Kraft zwischen Schweißkopf und Roboterarm im Umschaltpunkt zu den aktuellen Werten herangezogen.

Gemäß einem erfindungsgemäßen Verfahren wird der Schweißkopf zunächst an eine Übernahmestelle verfahren. In der Übernahmestelle übernimmt ein schweißkopfseitiger Greifer ein Anschweißteil. Anschließend wird der Schweißkopf in eine bzgl. der Schweißstelle des anzuschweißenden Anschweißteiles am Grundkörper vorgegebenen Umschaltlage koordinatengesteuert verfahren und ausgerichtet. Anschließend wird von der Koordinatensteuerung auf eine Kraftsteuerung umgeschaltet. Der Schweißkopf wird auf einem vorgegebenen Verfahrweg kraftgeregelt zur Schweißstelle hin verfahren.

Gemäß bevorzugter Ausgestaltung werden zur Kraftregelung des zwischen Schweißkopf und Roboterarm wirkenden Kräfte gemessen.

Gemäß weiter bevorzugter Ausgestaltung dienen als Bezugsgröße für die Kraftregelung die in der Umschaltlage zwischen Roboterarm und Schweißkopf gemessenen Kräfte.

Gemäß vorteilhafter Ausgestaltung sind die Sollkräfte für die Kraftregelung in Abhängigkeit von dem Schweißprozeß vorgegeben.

Gemäß weiter bevorzugter Ausgestaltung sind die Kraftkomponenten der Sollkraft derart vorgegeben, daß die Sollkraft senkrecht zur Grundkörperoberfläche an der Schweißstelle ausgerichtet ist.

Weiter ist es vorteilhaft, das Verfahren derart auszugestalten, daß zunächst ein Heizspiegel mit vorgegebener Anpreßkraft an der Schweißstelle des Grundkörpers in Anlage gerät. Anschließend wird der Schweißkopf in eine Zwischenlage verfahren, wobei in der Zwischenlage der Schweißkopf nicht mehr in Kontakt mit dem Grundkörper ist. In der Zwischenlage wird nun das Anschweißteil zur Schweißstelle hin ausgerichtet und anschließend gesteuert in Anlage mit dem Grundkörper gebracht.

Gemäß bevorzugter Ausgestaltung der Erfindung entspricht die Zwischenlage der Umschaltlage. Weiter ist es vorteilhaft, das Ausrichten des Anschweißteiles auf die Schweißstelle hin ohne ein Verfahren der Roboterarme im Schweißkopf durchzuführen.

Die Unteransprüche enthalten miteinander kombinierbare Ausgestaltungen der erfindungsgemäßen Vorrichtung bzw. des erfindungsgemäßen Verfahrens. Darüber hinaus ist ein Ausführungsbeispiel der Erfindung auch in der Zeichnung beschrieben. Es zeigen:
- Fig. 1: einen Schweißkopf in seiner Stellung nach der Aufnahme des Anschweißteiles vor Beginn des Anschweißvorgangs,
- Fig. 2: den Schweißkopf der Fig. 1 in der Stellung, in der sowohl Anschweißteil als auch Grundkörper an- und aufgeschmolzen werden,
- Fig. 3: den Schweißkopf der Fign. 1 und 2 in der Stellung, in der das Anschweißteil in Eingriff mit der Schweißstelle am Grundkörper gebracht werden kann,
- Fig. 4: einen Industrieroboter mit einem schematisch dargestellten Schweißkopf als Endeffektor,
- Fig. 4a: einen Industrieroboter mit einem Schweißkopf, der sich in Anlage an einem Grundkörper befindet,
- Fig. 5: einen schematisch dargestellten Schweißkopf mit seiner Ankopplung an den Arm des Industrieroboters, und
- Fig. 6: das schematische Flußdiagramm eines Verfahrens zum Anschweißen eines Anschweißteiles mit einem Schweißkopf und einem Industrieroboter.

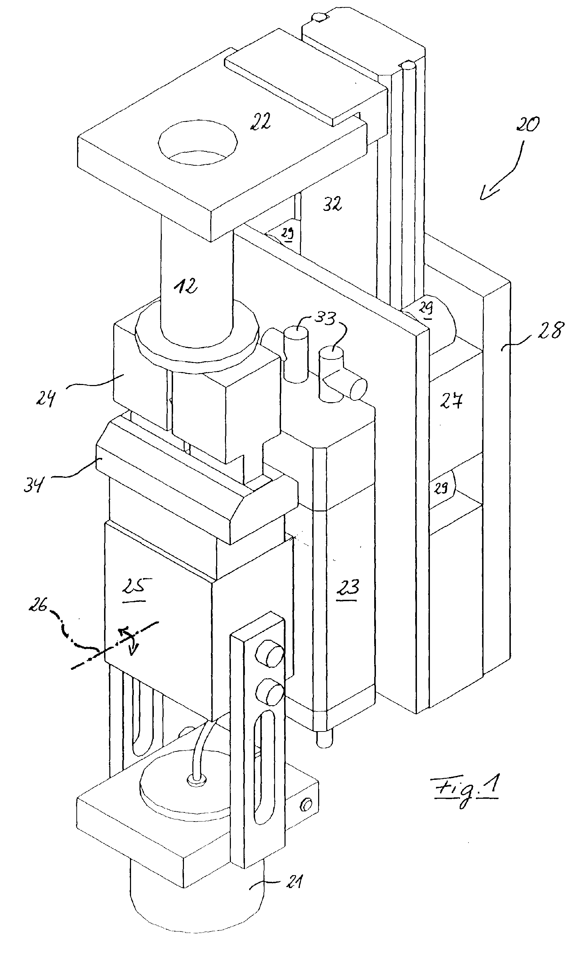

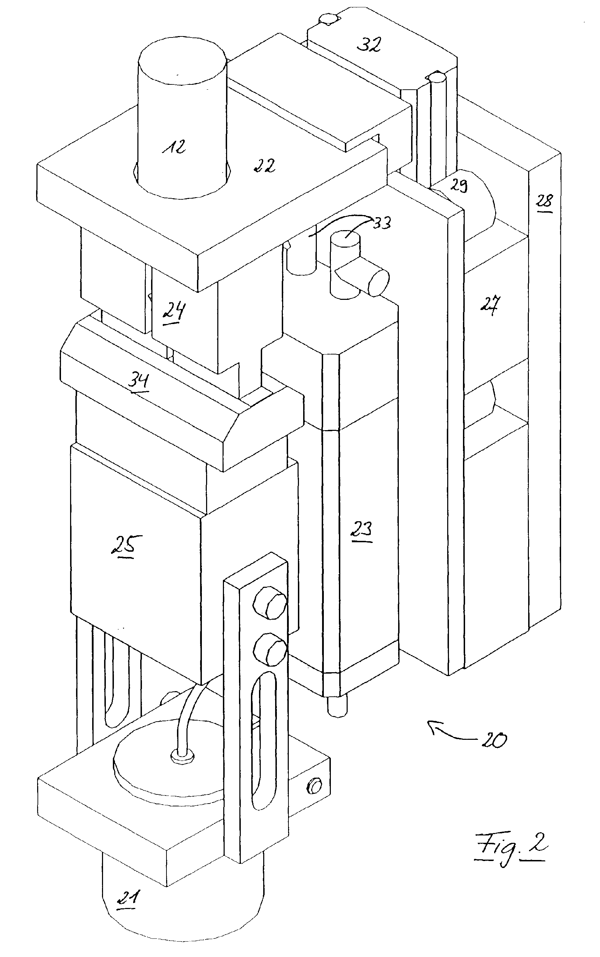

Die Fig. 1 zeigt den Schweißkopf 20, der geeignet ist, als Endeffektor eines Schweißroboters zu dienen und mittels dem Anschweißteil und Grundkörper unabhängig voneinander an- und aufgeschmolzen werden kann. Auf der Grundplatte 28 ist einerseits das Tragelement 25 und andererseits der Linearsteller 27 mit dem über die Antriebsrollen 29 linear verfahrbaren Ständer 32, an dessen Ende der zweite Schweißspiegel 22 angeordnet ist, befestigt.

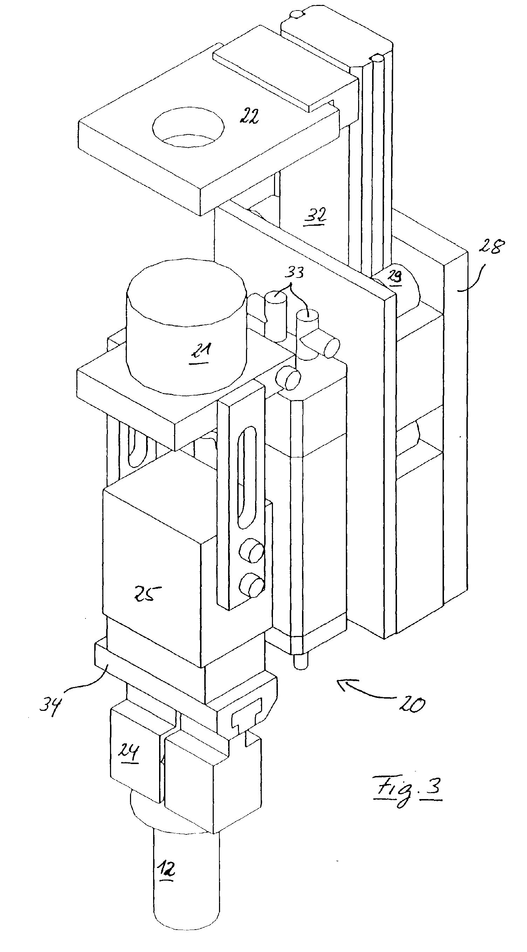

Dabei handelt es sich bei dem Linearsteller 27 um einen pneumatischen Stellantrieb oder vorzugsweise um einen elektrisch angetriebenen Schrittmotor, der über ein Getriebe auf wenigstens einen Teil der Antriebsrollen 29 einwirkt. Die Antriebsrollen 29 sind entweder Reibrollen, die an der Flanke des Ständers 32 angreifen und somit reibschlüssig ein Verfahren des Ständers 32 und somit des zweiten Schweißspiegels 22 aus einer dargestellten Nichteingriffsstellung in die in Fig. 2 dargestellte Eingriffsstellung ermöglicht. Alternativ zu den Reibrollen kann als Antriebsrollen 29 auch ein Zahnantrieb mit Zahnrädern und am Ständer 32 ausgebildeter Zahnstange verwendet werden. Dabei erfolgt das Verfahren des Ständers 32 bzw. des zweiten Schweißspiegels 22 derart, daß die Anlagekraft des Schweißspiegels 22 am Anschweißteil 12 gesteuert bzw. geregelt wird. Dies ermöglicht es, mit unterschiedlichen Anlagekräften des Schweißspiegels 22 am Anschweißteil 12 zunächst ein Anschmelzvorgang und anschließend mit geringerer Kraft einen Aufschmelzvorgang der Schweißstelle am Anschweißteil 12 vorzunehmen.

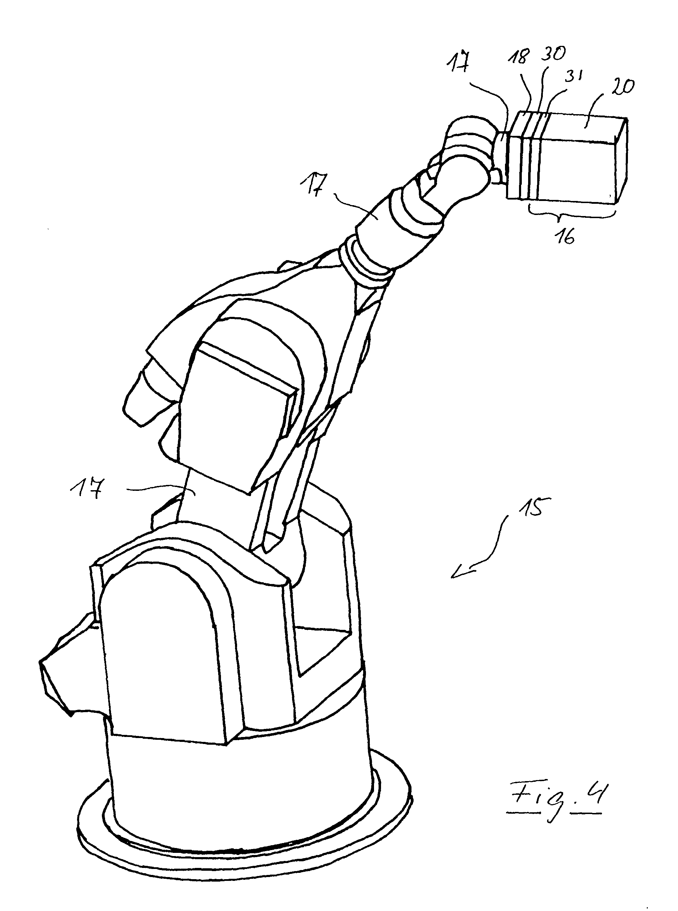

Auf der Grundplatte 28 ist auch das Antriebsmittel 23 für das Verfahren des Tragelementes 25 angeordnet. Dabei handelt es sich vorzugsweise um einen fluidisch, insbesondere pneumatisch angetriebenen Drehsteller, der über die zu den Leitungsstutzen 33 führenden, hier nicht dargestellten Fluidikleitungen versorgt wird. Das Tragelement 25 kann um die Schwenkachse 26 herum um 180° verschwenkt werden, so daß wahlweise entweder der erste Schweißspiegel 21 - wie in Fig. 1 dargestellt - zur Schweißstelle des Grundkörpers hin ausgerichtet ist bzw., daß - wie in Fig. 3 dargestellt - der Greifer, mit den in ihm gehaltenen Anschweißteil - zur Anschweißstelle - am Grundkörper hin ausgerichtet ist.

In der in Fig. 1 dargestellten Lage befindet sich der Schweißkopf immer dann, wenn nach dem Aufnehmen des Anschweißteiles durch den Greifer 24 das Tragelement 25 so um 180° verschwenkt wurde, daß der erste Schweißspiegel 21 in Eingriff mit der Schweißstelle des Grundkörpers gelangen kann. In dieser Stellung wird der Schweißkopf zum Grundkörper hin verfahren und er befindet sich auch in dieser Stellung, solange lediglich der Grundkörper mittels des ersten Schweißspiegels 21 erwärmt wird, ein Erwärmen des Anschweißteiles 12 jedoch noch nicht erfolgen soll.

Die Fig. 2 zeigt den Schweißkopf 20 der Fig. 1 in einer Stellung, wie er sich während des Erwärmens der Schweißstellen sowohl von Grundkörper als auch von Anschweißteil 12 befindet. Um aus der in der Fig. 1 dargestellten Stellung in die in Fig. 2 dargestellte Stellung zu gelangen, wird über den Linearsteller 27 mit seinen Antriebsrollen 29 der Ständer 32 verfahren. Somit gelangt der Schweißspiegel 22, der an dem Ständer 32 befestigt ist, in Anlage mit der Schweißstelle des Anschweißteiles 12. Dabei ist der Schweißspiegel 22 so ausgebildet, daß lediglich die im Bereich der Schweißstelle liegenden Teile des Anschweißteils 12 in Anlage mit dem Schweißspiegel 22 gelangen. Neben einem vollflächigen Schweißspiegel kann er, wie dargestellt, insbesondere eine Ausnehmung aufweisen, die dazu dient, daß in den Grundkörper hineinragende Teile nicht in Anlage mit dem Schweißspiegel 22 gelangen. Der Schweißspiegel 22 wird dazu mit dem Ständer 32 in Richtung auf den Greifer 24 verfahren. Das Verfahren erfolgt dabei kraftgesteuert bzw. kraftgeregelt so weit, bis die Eingriffsstellung des Schweißspiegels 22 erreicht wird. Vorzugsweise ist die Eingriffsstellung erreicht, wenn die Anlagekraft des Schweißspiegels 22 an dem Anschweißteil 12 einen vorgegebenen Kraftwert erreicht, wobei dieser Kraftwert unterschiedliche Vorgaben in Abhängigkeit der Anlagezeit aufweisen kann. So kann für eine erste Anwärmphase des thermoplastischen Kunststoffes des Anschweißteiles 12 eine höhere Anlagekraft des Schweißspiegels 22 gewählt werden als für eine darauffolgende Aufweichphase für das thermoplastische Material des Anschweißteiles 12 im Bereich der Schweißstelle.

Eine Veränderung der Lage des Tragelementes 25 mit dem Greifer 24 und dem ersten Schweißspiegel 21 durch die Antriebsmittel 23 ist noch nicht erfolgt.

In der in Fig. 2 dargestellten Stellung befindet sich der Schweißkopf 20 dann, wenn sich der erste Schweißspiegel 21 in Anlage mit der Schweißstelle des Grundkörpers befindet und gleichzeitig die Erwärmung des Anschweißteiles 12 erfolgen soll. Nach Beendigung des An- und Aufschmelzens des thermoplastischen Kunststoffes des Anschweißteiles 12 wird der Schweißspiegel mittels des Ständers 32 und dem Linearantrieb 27 wieder in die in Fig. 1 dargestellte Stellung verfahren. Dabei kann sich der erste Schweißspiegel 21 noch in Anlage mit dem Grundkörper befinden. Erst wenn auch am Grundkörper die An- und Aufschmelzphase beendet ist, wird der Schweißkopf 20 von der Schweißstelle am Grundkörper weggefahren und zwar zumindest soweit, daß ein Verfahren des ersten Schweißspiegels und des Anschweißteiles durch Verschwenken des Tragelementes 25 um die Schwenkachse 26 durch das Antriebsmittel 23 so erfolgen kann, daß der Grundkörper dabei außerhalb des Bewegungsraumes von Anschweißteil 12 und dem Schweißkopf 20 liegt.

Durch die Schwenkbewegung des Tragelementes 25 um die Schwenkachse 26 aus der in der Fig. 1 dargestellten Stellung um 180° wird die in der Fig. 3 dargestellte Stellung erreicht.

Wie in Fig. 3 gezeigt, befindet sich nun das Anschweißteil 12 und der Greifer 24 des Schweißkopfes 20 in einer Stellung, die auf die Schweißstelle am Grundkörper hin ausgerichtet ist. Die Stellung der Fig. 3 wird aus der in Fig. 1 dargestellten Stellung durch Verschwenken des Tragelementes 25 um die Schwenkachse 26 erreicht. Anstelle des Verschwenkens um 180° ist es bei entsprechend anderer Anordnung von Greifer 24 und erstem Schweißspiegel 21 am Tragelement 25 auch möglich, mit geringeren Schwenkwinkeln (beispielsweise 90°) andere Verfahrantriebe vorzusehen, die einerseits den ersten Schweißspiegel 21 in eine Stellung verfahren, in der er nicht mehr in Anlage mit dem Grundkörper, an dem das Anschweißteil 12 angeschweißt wird, gelangt und gleichzeitig das Anschweißteil 12 bzw. der Greifer 24 des Schweißkopfes 20 hin zum Grundkörper ausgerichtet werden. Vorteilhaft ist es aber, wenn der zweite Schweißspiegel 22 dann in Eingriff mit dem Anschweißteil 12 bringbar ist, wenn der erste Schweißspiegel 21 in seiner Wirkstellung ist, also auf die Schweißstelle 13 am Grundkörper 11 hin ausgerichtet ist.

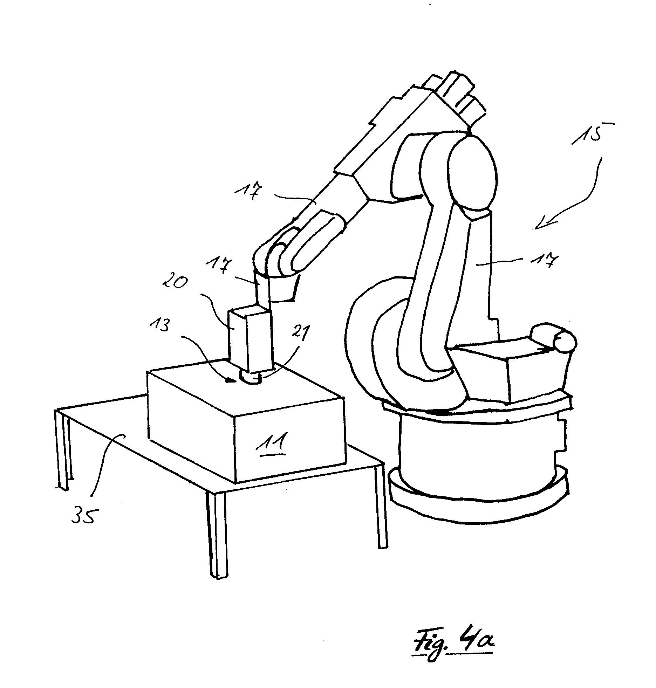

Die Fig. 4 zeigt den Schweißkopf 20 in schematischer Darstellung, wie er als Endeffektor eines Industrieroboters 15 angeordnet sein kann.

Der Industrieroboter 15 ist um seine Arme 17 und senkrecht dazu verschwenkbar. Es handelt sich also um einen 6-Achsen-Roboter. Dieser Roboter ist in der Lage, durch Koordinatensteuerung nahezu jeden Punkt inerhalb seines Bewegungsraumes anzufahren und dabei den Schweißkopf entsprechend einer gewünschten Richtung auszurichten. Damit der Schweißroboter auch das kraftgeregelte Anliegen des Schweißkopfes 20 an den Grundkörper durchführen kann, weist der Industrieroboter einen Kraftsensor 18 auf, der zwischen dem Roboterarm 17 und dem roboterarmseitigen Kupplungsstück 30 angeordnet ist. Der Kraftsensor ist dabei nicht nur in der Lage, die axial zum Roboterarm 17 wirkende Kraft zu erfassen, er erfaßt vielmehr vorzugsweise auch Kräfte in andere Richtungen. Am besten ist es, wenn die Auflösung des Kraftsensors 18 es erlaubt, die auf ihn einwirkenden Kräfte und Momente in allen Richtungen zu erfassen. Werden alle Kräfte und Momente erfaßt, so ist es möglich, den Endeffektor 16 mit dem Schweißkopf 20 so in Anlage mit dem Grundkörper zu bringen, daß Kippmomente oder Drehmomente, die zwischen Grundkörper und Schweißkopf 20 wirken könnten, durch entsprechendes Verfahren des Schweißkopfes 20 durch den Industrieroboter ausgeglichen werden können.

Auch eine Nachführung des Schweißkopfes entsprechend der während des Schweißvorganges aufgrund der eingeleiteten Kräfte auftretenden reversiblen Verformung des Grundkörpers ist möglich.

Die Fig. 4a zeigt in schematischer Darstellung den Schweißkopf 20 als Endeffektor eines Industrieroboters 15 in seiner Stellung zu einem Grundkörper 11. Dabei befindet sich der erste Schweißspiegel 21 des Schweißkopfes 20 in der Schweißstelle 13 in Anlage mit dem Grundkörper 11. Der Grundkörper 11 ist dabei auf einem Spannkörper 35 eingespannt und wird bzgl. des Schweißroboters 15 in definierter Lage gehalten. Durch Verfahren des Schweißroboters kann nahezu jede beliebige Schweißstelle an der Oberfläche des Grundkörpers 11 angefahren werden. Auch kann der Schweißkopf 20 nahezu beliebig zum Grundkörper 11 hin ausgerichtet werden.

Vorzugsweise wird der Schweißkopf 20 so zum Grundkörper 11 hin ausgerichtet, daß die letzte Zustellbewegung, die kraftgeregelt vorgenommen wird, entlang einer vorgeschriebenen, vorzugsweise linearen Bewegung senkrecht zur Oberfläche des Grundkörpers 11 in der Schweißstelle 13 erfolgt. Die genaue Kenntnis der Lage des Grundkörpers 11 bzgl. dem Industrieroboter 15 ist erforderlich, um die Koordinaten zu berechnen, an dem von der Positionssteuerung und Ausrichtung des Schweißkopfes 20 auf die Kraftregelung übergegangen wird. Sie kann unter Umständen auch durch geeignete Sensoren, beispielsweise optische Erfassungsmittel, erfaßt werden. Ebenso kann auch die genaue Lage des Grundkörpers durch entsprechende Sensoren erfaßt und entsprechend berücksichtigt werden.

Damit ein einfaches und schnelles Wechseln des Schweißkopfes 20 möglich ist, ist entweder die Grundplatte 28 bzw. ein mit der Grundplatte 28 verbundenes Teil als Kupplungsstück 31 als Gegenstück zum Kupplungsstück 30 des Roboterarmes ausgebildet. Über die beiden Kupplungsstücke wird nicht nur eine lagedefinierte Verbindung zwischen Roboterarm 17 und Endeffektor 16 mit dem Schweißkopf 20 ausgebildet. Vielmehr werden vorzugsweise gleichzeitig alle elektrischen und fluidischen Verbindungen miteinander verkuppelt bzw. kontaktiert.

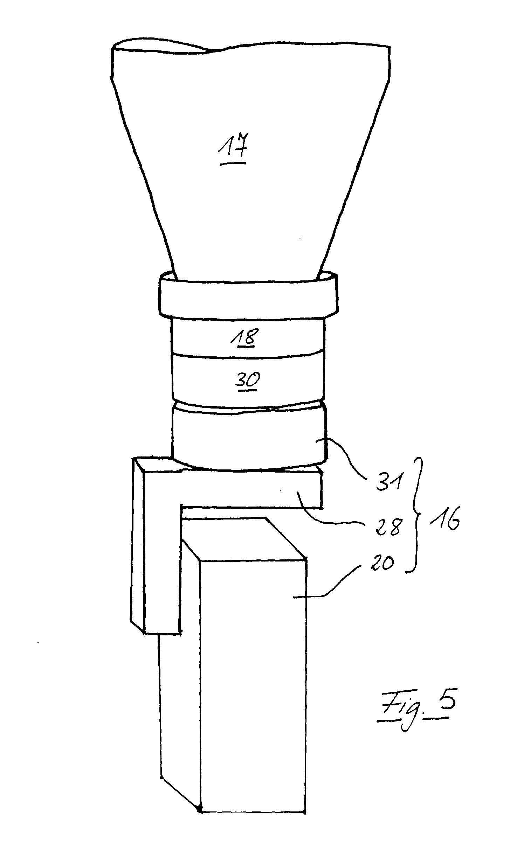

Die Fig. 5 zeigt das Ende des Roboterarmes 17, das dem Endeffektor 16 zugewandt ist. Am Ende des Roboterarmes 17 befindet sich zunächst der Kraftsensor 18, der in der Lage ist, Kräfte, vorzugsweise Kräfte und Momente in allen Richtungen, zu erfassen. Nach dem Kraftsensor 18 befindet sich am Roboterarm 17 das Kupplungsstück 30 zum Ankoppeln des Endeffektors. Der Endeffektor 16 besteht bei dieser Anwendung aus dem entsprechenden Kupplungsstück 31 zum Ankoppeln des Endeffektors an den Roboterarm, und dem Schweißkopf 20 mit seiner Grundplatte 28, die gemäß dieser Zeichnung abgewinkelt ist, damit eine koaxiale Ausrichtung des Schweißkopfes 20 zur Längsachse des Roboterarmes 17 ermöglicht wird. Die Längsachse des Schweißkopfes 20 wird dabei in der Ausgestaltung gemäß den Fign. 1 und 3 durch die Verbindungslinie zwischen Greifer 24 und erstem Schweißspiegel 21 definiert.

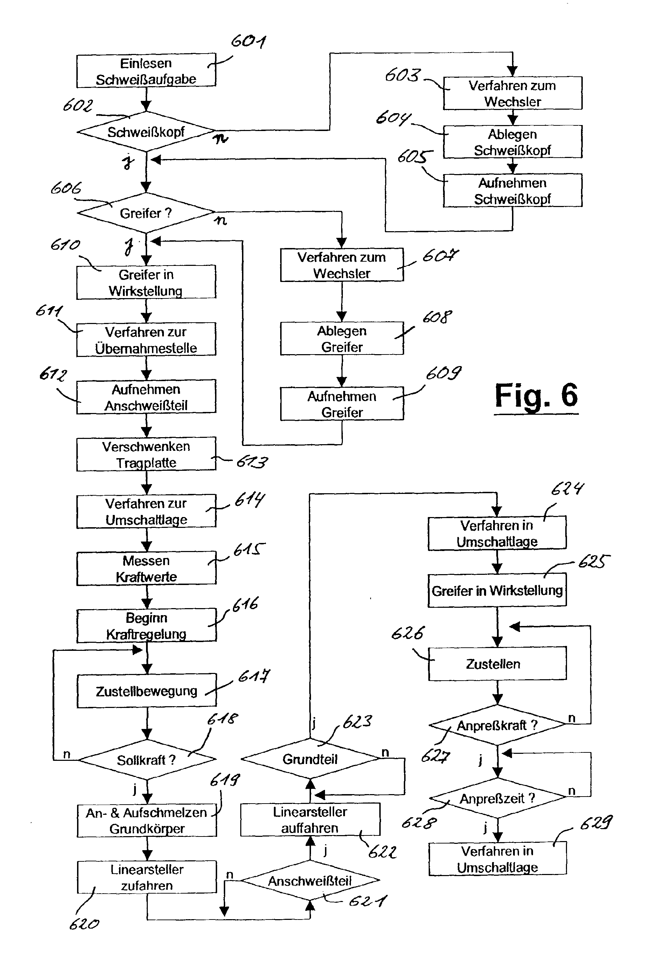

Die Fig. 6 zeigt das Flußdiagramm eines Verfahrens zum Anschweißen eines Anschweißteiles an einem Grundkörper, wie es mit einem Schweißkopf gemäß den Fign. 1 bis 3 und einem Industrieroboter mit anmontiertem Schweißkopf gemäß den Fign. 4, 4a und 5 möglich ist.

Gemäß dem Schritt 601 erfolgt zunächst das Einlesen der bevorstehenden Schweißaufgabe. Darunter wird verstanden, daß zunächst beispielsweise aus einem Speicher eingelesen wird, welches Anschweißteil 12 an welcher Schweißstelle 13 am Grundkörper 11 befestigt werden soll. Die Schweißaufgabe kann dabei innerhalb einer zyklisch abgerufenen Folge einzelner Schweißaufgaben oder auch manuell vorgegeben aufgerufen werden. Die Daten einer Schweißaufgabe können vorzugsweise in sog. teach-in-Verfahren erfaßt werden. Es ist auch möglich, sofern entsprechende Informationen maschinell erfaßbar vorliegen, eine auszuführende Folge oder auch einzelne Schweißaufgabe in Abhängigkeit des bereitgestellten Grundkörpers durchzuführen. Die Informationen können zum Beispiel durch optische Erkennung des Grundkörpers und ggf. auch seiner Bestückung mit Anschweiß- oder Anbauteilen erlangt werden. Durch die Informationen bzgl. der Schweißaufgabe wird nicht nur die Umschaltlage vom Übergang von der Positionssteuerung auf die Kraftsteuerung des Endeffektors des Industrieroboters bestimmt, es bestimmt sich vielmehr auch, wie der Schweißkopf gestaltet sein muß und ob evtl. am Schweißkopf ein Wechsel des montierten Greifers erfolgen soll.

Gemäß dem Schritt 602 wird aufgrund der eingelesenen Schweißaufgabe ermittelt, ob die Schweißaufgabe mit dem derzeit als Endeffektor montierten Schweißkopf 20, insbesondere mit den derzeit montierten Schweißspiegeln 21, 22, durchgeführt werden kann. Ist ein Schweißkopfwechsel nicht erforderlich, so wird zum Schritt 606 gesprungen. Andernfalls wird gemäß dem Schritt 603 der derzeit montierten Schweißkopf zu einem Schweißkopf-Wechsler verfahren und dort vorzugsweise selbsttätig vom Roboterarm 17 abgekuppelt. Dies geschieht vorzugsweise durch Lösen der Wirkverbindung zwischen den beiden Kupplungsstücken 30, 31, gemäß dem Schritt 604. Gemäß dem Schritt 605 wird dann der Roboterarm, nunmehr ohne Endeffektor, zu der Stelle verfahren, an dem der andere Schweißkopf angekuppelt werden kann. Die Verkupplung erfolgt dabei gemäß dem Schritt 605 vorzugsweise selbsttätig zwischen einem Kupplungsstück 30 am Roboterarm und dem Kupplungsstück 31 an dem Schweißkopf. Anschließend wird zum Schritt 606 übergegangen.

In dem Schritt 606 wird nun überprüft, ob der derzeit montierte Schweißkopf auch den richtigen Greifer aufweist. Ist am Schweißkopf ein tauglicher Greifer angeordnet, so wird zum Schritt 610 gesprungen. Andernfalls wird gemäß dem Schritt 607 der Endeffektor zum Greiferwechsler verfahren. Während dieses Vorganges muß auch sichergestellt werden, daß der Greifer zugänglich ausgerichtet ist, d.h. daß das Tragelement 25 so geschwenkt ist, daß der Greifer auf einen Grundkörper hin ausgerichtet ist und nicht auf den zweiten Schweißspiegel 22.

Gemäß dem Schritt 608 wird nun durch selbsttätiges Öffnen der Halterung 34 für den Greifer der auszutauschende Greifer abgelegt. Anschließend wird gemäß dem Schritt 609 der Schweißkopf zum aufzunehmenden Greifer hin verfahren und der Greifer wiederum selbsttätig mit der Halterung 34 für den Greifer 24 verkoppelt. Dann wird zum Schritt 610 übergegangen.

Für die Durchführung der Schritte 602 bis 609 ist es möglich, daß mitprotokolliert wird, welcher Schweißkopf bzw. welcher Greifer sich gerade an welchem Ort befindet. Einfacher ist es, wenn die Greifer und Schweißköpfe entsprechende, maschinell verarbeitbare Identifikationsmerkmale aufweisen.

Gemäß dem Schritt 610 wird, falls dies noch nicht geschehen ist, der Greifer in die Wirkstellung verfahren, d.h. das Tragelement 25 wird so verschwenkt, daß der Greifer wie in Fig. 3 dargestellt nach unten, zu einem eventuellen Grundkörper 11 hin und nicht zum Schweißspiegel 22 hin ausgerichtet ist.

Anschließend wird der Schweißkopf als Endeffektor des Industrieroboters zur Übernahmestelle des Anschweißteiles verfahren. Gemäß dem Schritt 612 wird das Anschweißteil in der Übernahmestelle von dem Greifer ergriffen. Nach dem Ergreifen des Anschweißteiles wird gemäß dem Schritt 613 die Tragplatte verschwenkt. Durch dieses Verschwenken ist nunmehr das Anschweißteil zum zweiten Schweißspiegel hin ausgerichtet, während der erste Schweißspiegel nunmehr in die Lage gelangt, in die es in Eingriff mit dem Grundkörper gelangen kann.

Nunmehr wird gemäß dem Schritt 614 der Endeffektor des Industrieroboters, also der Schweißkopf, koordinatengesteuert bis zur Umschaltlage verfahren. Die Umschaltlage ist dabei nicht nur ein Raumpunkt, den der Industrieroboter anfährt, vielmehr bezieht die Umschaltlage auch die Ausrichtung des Schweißkopfes zur Schweißstelle am Grundkörper hin ein. Die Koordinatensteuerung erfolgt dabei so, daß der Schweißkopf zu einem bestimmten Raumpunkt, der zusammen mit der Schweißaufgabe vorgegeben oder ermittelt wird, gefahren und ausgerichtet wird. Das positionsgesteuerte Verfahren erfolgt in für Industrieroboter üblicher Weise.

Nach dem Erreichen der Umschaltlage wird gemäß dem Schritt 615 durch den Kraftsensor zwischen Endeffektor (Schweißkopf) und Roboterarm gemessen, welche Kräfte auf den Roboterarm wirken. Diese werden als Bezugspunkt gewählt, d.h. es werden nunmehr alle Kraftkomponenten auf Null gesetzt. Gemäß dem Schritt 616 beginnt nun die kraftgeregelte Zustellbewegung. Hierzu wird entweder der erforderliche Zustellweg durch Rechnung ermittelt oder aber der Zustellweg, der zusammen mit der Schweißaufgabe vorgegeben wurde, aktiviert. Vorzugsweise ist die Umschaltlage so gewählt, daß der Zustellweg eine lineare Bewegung auf der Normalen zur Schweißstelle am Grundkörper ist. Gemäß dem Schritt 617 wird die Zustellbewegung entlang des vorgegebenen Weges begonnen. Es wird nun im Schritt 618 überprüft, ob die im Kraftsensor erfaßte aktuelle Kraft zwischen Schweißkopf und Roboterarm der zum Beispiel zusammen mit der Schweißaufgabe vorgegebenen Sollkraft entspricht. Die Sollkraft wird dabei zusammen mit der Schweißaufgabe festgelegt. Es handelt sich um eine für jeden Schweißvorgang anders vorgebbare Größe, wobei die Kraftrichtung vorzugsweise jeweils so bestimmt ist, daß sie in der Flächennormale zur Schweißstelle am Grundkörper liegt. Vorzugsweise erfolgt auch die Zustellbewegung genau in dieser Richtung. Solange im Schritt 618 nicht erkannt wurde, daß die Sollkraft erreicht wurde, wird zum Schritt 617 zurückgesprungen und die Zustellbewegung fortgesetzt.

Wurde im Schritt 618 erkannt, daß die Sollkraft erreicht wurde, so erfolgt gemäß dem Schritt 619 der An- und Aufschmelzvorgang des Grundkörpers in der Schweißstelle. Dies geschieht dadurch, daß der erste Schweißspiegel 21 sich in Anlage mit der Schweißstelle 13 des Grundkörpers befindet. Dabei kann es sinnvoll sein, während des Anschmelzens eine größere Kraft zwischen Grundkörper 11 und Schweißspiegel 21 aufrechtzuerhalten, wie während des Aufschmelzens. Dies wird über entsprechende Fortführung der Kraftregelung erreicht. Sofern geeignete Kraftkomponenten und Kraftmomente zwischen Grundkörper und Schweißkopf über den Kraftsensor 18 möglich ist, können Scher- und Kippmomente zwischen Schweißkopf 20 und Grundkörper durch entsprechende Weiterführung der Kraftregelung ausgeglichen werden.

Nunmehr wird gemäß dem Schritt 620 auch der Linearsteller zugefahren. Darunter ist zu verstehen, daß der zweite Schweißspiegel in Anlage mit der Schweißstelle des Anschweißteiles gebracht wird. Der Zeitpunkt des Zufahrens des Linearstellers ist dabei vorzugsweise so bestimmt, daß das An- und Aufschmelzen des Anschweißteiles möglichst zeitgleich mit dem An- und Aufschmelzen des Grundkörpers an der jeweiligen Schweißstelle beendet wird. Das hier dargestellte Flußdiagramm berücksichtigt den Fall, daß das An- und Aufschmelzen des Anschweißteiles weniger lang dauert, als das An- und Aufschmelzen des Grundkörpers. Liegt der umgekehrte Fall vor, so ist es auch möglich, den Linearsteller zuzufahren, bevor der erste Anschweißspiegel sich in Anlage mit dem Grundkörper befindet. Es kann dies insbesondere während des Ablaufes der Zustellbewegung geschehen. Ferner ist zu beachten, daß der An- und Aufschmelzvorgang des Anschweißteiles auch erst dann beendet werden kann, wenn das Entfernen des ersten Schweißspiegels von der Schweißstelle am Grundkörper bereits stattfindet.

Gemäß dem Schritt 621 wird nun überprüft, ob das Anschweißteil in erforderlicher Weise an- und aufgeschmolzen wurde. Dies geschieht beispielsweise über eine Zeitsteuerung. Wird im Schritt 621 festgestellt, daß das entsprechende Zeitintervall noch nicht abgelaufen ist, so wird das Ende dieses Zeitintervalls abgewartet.

Sobald das entsprechende Zeitintervall abgelaufen ist, wird gemäß dem Schritt 622 der Linearsteller wieder aufgefahren, d.h. der zweite Schweißspiegel wird von seiner Einstellung wieder in die Nichteingriffsstellung verfahren.

Gemäß dem Schritt 623 wird nun abgewartet, bis das Zeitintervall für das An- und Aufschmelzen des Grundkörpers bereits erfolgt ist. Ist dies nicht der Fall, so wird abgewartet, bis dieses Zeitintervall verstrichen ist. Anstelle des Zeitkriteriums kann auch ein anderes Kriterium für das Beenden des Anund Aufschmelzvorganges am Grundkörper verwendet werden.

Anschließend wird gemäß dem Schritt 624 der Schweißkopf wieder in seine Umschaltlage verfahren. Dabei wird nur gemäß der hier dargestellten bevorzugten Ausführungsform der Schweißkopf wieder in die Umschaltlage verfahren. Es würde auch genügen, den Schweißkopf in eine andere Zwischenlage zu verfahren, in der sichergestellt ist, daß die Verfahrbewegung des Schweißkopfes zwischen der Anwärmstellung und der Andrückstellung des Anschweißteiles verfahren werden kann, ohne daß eine Kollision etwa mit dem Grundkörper auftritt. Um eine bessere Verfahrsteuerung zu erreichen, ist es jedoch vorteilhaft, als Zwischenlage die Umschaltlage anzufahren.

Gemäß dem Schritt 625 wird nun der Greifer in seine Wirkstellung verfahren, d.h. das Tragelement 25 wird so verschwenkt, daß das im Greifer gehaltene Anschweißteil auf die Schweißstelle am Grundkörper hin ausgerichtet wird. Entsprechend den Schritten 617 und 618 erfolgt nun gemäß den Schritten 626 und 627 ein kraftgeregeltes Zustellen des Schweißkopfes. Die Schweißstelle des Anschweißteiles gelangt in Anlage an die Schweißstelle des Grundkörpers. Dabei ist die Anpreßkraft geregelt, und zwar vorzugsweise so, daß eine flächennormale Kraft zum Grundkörper hin besteht. Gemäß dem Schritt 628 wird nun überprüft, ob die erforderliche Anpreßzeit für das Anschweißteil am Grundkörper abgelaufen ist. Ist dies nicht der Fall, so wird unter Aufrechterhaltung der entsprechend eingeregelten Anpreßkraft abgewartet, bis das Zeitintervall abgelaufen ist. Erst wenn die erforderliche Anpreßzeit abgelaufen ist, wird gemäß dem Schritt 629 der Greifer geöffnet, so daß das Anpreßteil nunmehr allein am Grundkörper gehalten ist und dann der Schweißkopf zurück in die Umschaltlage fahren. Zum Durchführen des nächsten Schweißvorganges muß nun wieder zum Schritt 601 gesprungen werden.

## Patentansprüche

1. Vorrichtung zum Heizelementschweißen, mit einem Schweißkopf und einem Zustellantrieb zum Verfahren des Schweißkopfes, dadurch gekennzeichnet, daß der Zustellantrieb ein Industrieroboter (15) ist, wobei die Positionierung des Schweißkopfes (20) bis in eine definierte Umschaltlage bzgl. der Schweißstelle (13) koordinatengesteuert ist und wobei die Positionierung des Schweißkopfes (20) im Bereich der Schweißstelle kraftgesteuert ist.

2. Vorrichtung nach Anspruch 1, dadurch gekennzeichnet, daß der Industrieroboter (15) ein 6-Achsen-Industrieroboter ist.

3. Vorrichtung nach Anspruch 1 oder 2, dadurch gekennzeichnet, daß zwischen Schweißkopf (20) und Roboterarm (17) ein Kraftsensor (18) angeordnet ist.

4. Vorrichtung nach Anspruch 3, dadurch gekennzeichnet, daß ein Kraftsensor (18) zwischen Roboterarm (17) und Schweißkopf (20) angeordnet ist, der die in allen Richtungen wirkenden Kräfte erfaßt.

5. Vorrichtung nach Anspruch 3 oder 4, dadurch gekennzeichnet, daß bei der Kraftregelung als zurückgeführte Größe die Differenz zwischen der aktuell auftretenden Kraft und der Kraft im Zeitpunkt des Überganges von Koordinatensteuerung auf Kraftregelung herangezogen wird.

6. Vorrichtung nach einem der vorhergehenden Ansprüche, dadurch gekennzeichnet, daß der Schweißkopf (20) selbsttätig an dem Roboterarm (17) an- und abkuppelbar ist.

7. Verfahren zum Heizelementschweißen,
- wobei ein Anschweißteil (12) von einem Greifer (24) eines an einem Roboterarm (17) gehaltenen Schweißkopfes (20) an einer Übergabestelle übernommen wird,
- der Schweißkopf (20) in eine bzgl. der Schweißstelle (13) des Anschweißteiles (12) am Grundkörper (11) vorgegebenen Umschaltlage koordinatengesteuert verfahren und ausgerichtet wird,
- in der Umschaltlage die Koordinatensteuerung auf eine Kraftregelung umgeschaltet wird, und
- der Schweißkopf (20) auf einem vorgegebenen Verfahrweg kraftgeregelt zur Schweißstelle verfahren wird.

8. Verfahren nach Anspruch 7, dadurch gekennzeichnet, daß für die Kraftregelung die zwischen Schweißkopf (20) und Roboterarm (17) wirkenden Kräfte herangezogen werden.

9. Verfahren nach Anspruch 8, dadurch gekennzeichnet, daß als Bezugsgröße für die Kraftregelung die in der Umschaltlage zwischen Roboterarm und Schweißkopf gemessenen Kräfte herangezogen werden.

10. Verfahren nach Anspruch 8 oder 9, dadurch gekennzeichnet, daß als Sollkräfte für die Kraftregelung Kräfte vorgegeben sind, die in Abhängigkeit von dem Schweißprozeß bestimmt sind.

11. Verfahren nach Anspruch 10, dadurch gekennzeichnet, daß die Kraftkomponenten der Sollkraft derart vorgegeben sind, daß die Sollkraft senkrecht zur Grundkörperoberfläche an der Schweißstelle ausgerichtet ist.

12. Verfahren nach einem der Ansprüche 7 bis 11, dadurch gekennzeichnet, daß zunächst mit vorgegebener Anpreßkraft ein Schweißspiegel (21) in Anlage mit der Schweißstelle des Grundkörpers gebracht wird,
anschließend der Schweißkopf (20) in eine Zwischenlage in der der Schweißkopf nicht mehr in Kontakt mit dem Grundkörper ist, verfahren wird,
dann das Anschweißteil (12) zur Schweißstelle hin ausgerichtet wird, und
kraftgesteuert in Anlage mit dem Grundkörper gebracht wird.

13. Verfahren nach Anspruch 12, dadurch gekennzeichnet, daß die Zwischenlage der Umschaltlage entspricht.

14. Verfahren nach Anspruch 11 oder 12, dadurch gekennzeichnet, daß das Ausrichten des Anschweißteiles auf die Schweißstelle ohne Verfahren des Industrieroboters im Schweißkopf erfolgt.
